# EUROPEAN PATENT SPECIFICATION

(11) **EP 1 529 440 B1**
(45) Date of publication and mention of the grant of the patent: **16.04.2008**
(21) Application number: 04026561.3
(22) Date of filing: 09.11.2004
(51) Int. Cl.: A01M 29/00

(54) **Bird-pecking-preventive polymer insulator**
Polymerisolator zum Verhindern des Pickens von Vögeln
Isolateur polymére pour empecher de picoter des oiseaux

(30) Priority: 10.11.2003 JP 2003379625
(43) Date of publication of application: 11.05.2005
(73) Proprietor: NGK INSULATORS, LTD., Nagoya-shi, Aichi-ken 467-8530 (JP)
(72) Inventor: Kondo, Takanori NGK Insulators, Ltd., Nagoya-shi Aichi-ken 467-8530 (JP)
(74) Representative: TBK-Patent

(56) References cited:
- EP-A- 1 143 460
- EP-A- 1 339 074
- DE-A1- 19 825 973
- US-A- 4 562 212
- US-A- 4 693 889
- US-A- 4 897 027

## Description

### BACKGROUND OF THE INVENTION

### Field of the Invention

The present invention relates to a polymer insulator installed outdoors, and more particularly to a bird-pecking-preventive polymer insulator which repels birds.

### Background Art

A polymer insulator is a type of insulator which includes an insulator body, and a holding metal piece fitted on each end of the insulator body, the insulator body being composed of a core member formed of a reinforced plastic material and a cover member formed of a rubber material and covering the periphery of the core member. The polymer insulator of the above type has excellent mechanical strength and weather resistance in spite of its light weight, and has high insulation performance. Thus, the polymer insulator has been widely employed as an insulator installed outdoors, see e.g. EP-A-1 143 460.

Although the above polymer insulator has excellent characteristics, the insulator has a structure-related drawback which conventional porcelain insulators do not raise. Namely, the polymer insulator has a rubber-made cover member provided on the periphery of the core member made of a reinforced plastic material, and the cover member has a plurality of flexible sheds, which are highly attractive to birds that have a strong sense of curiosity, such as wild birds. Such birds selectively peck the sheds to destroy the portions, leading to breakage of a sheath portion of the cover member. In order to prevent such damage of power transmission equipment caused by birds, a device has been developed. Japanese Patent Application Laid-Open (*kokai*) No. 11-289644 discloses a bird-pecking-preventive device for repelling birds from crossarms of utility poles equipped with porcelain insulators.

The bird-pecking-preventive device has a large number of needle-like protrusions which protrude upward on the device frame and is attached to a crossarm of a utility pole equipped with porcelain insulators, so as to repel birds from the crossarm of the utility pole and the porcelain insulators. Thus, the device could be also employed together with the aforementioned polymer insulator for preventing bird pecking. However, the device occupies almost the entire portion of a utility pole crossarm, and use of the device in practice with respect to a polymer insulator is economically disadvantageous. In addition, the device does not exert bird-pecking-preventive effect with respect to a polymer insulator which is not attached to a crossarm in use.

Birds destroy a polymer insulator by pecking, only during the period of constructing power transmission equipment having polymer insulators, and pecking occurs most frequently before passage of electricity through the power transmission equipment. In contrast, after electricity starts to pass through power transmission equipment, birds do not come to a polymer insulator, due to electric field generated through passage of electricity, transmission of high-voltage current, or other factors. Thus, breakage of polymer insulators caused by pecking by birds does not occur. Under such circumstances, currently taken measures against pecking by birds include covered polymer insulators with a protective cover or a protective net during a period of constructing power transmission equipment. However, the measures taken at present are definitely unsatisfactory, and birds still peck with curiosity a cover member of the polymer insulators through the protective cover or net, thereby breaking the polymer insulators.

### SUMMARY OF THE INVENTION

With an aim to prevent breakage of a cover member of a polymer insulator caused by pecking by a bird, the present invention employs an avian repellent in such a manner that it is carried by the polymer insulator and maintains avian repellency at least during construction of power transmission equipment, thereby inhibiting pecking of the polymer insulator by birds. In other words, an object of the invention is to provide a bird-pecking-preventive polymer insulator which itself exhibits repellency to birds.

Accordingly, the present invention is directed to a bird-pecking-preventive polymer insulator as defined in claim 1.

The bird-pecking-preventive polymer insulator according to the present invention may carry an avian repellent which is applied to a surface of the cover member. Alternatively, the polymer insulator may carry an avian repellent which has been kneaded into the rubber material for forming the cover member. Preferably, the polymer insulator carries the avian repellent in an amount of 0.01 wt.% to 20 wt.% based on the entire cover member.

The bird-pecking-preventive polymer insulator of the present invention contains, as the avian repellent, a taste-bud irritant for irritating the taste buds of birds. The taste-bud irritant may be a pungent component or a substance containing a pungent component. Alternatively, the taste-bud irritant may be a bitter component or a substance containing a bitter component.

Examples of the substance containing a pungent component include substances derived from Capsicum annuum, Zingiber officinale, Zanthoxyum piperitum, Gomphrena globosa, Polygonum hydropiper, Wasabia japonica, or seeds of Brassica juncea, and pungent components extracted therefrom; e.g., capsaicin, 6-gingerol, α-sanshool, spilanthol, tadeonal, and sinigrin. Examples of the substance containing a bitter component include substances derived from Swertia japonica, Picrasma quassioides, or Sophora flavescens, and bitter components extracted therefrom; e.g., swertiamarin, quassin, and matrine.

The bird-pecking-preventive polymer insulator according to the present invention has a cover member serving as a member of the insulator body, the cover member carrying an avian repellent which is applied to a surface of the cover member or which has been kneaded in advance into a rubber material forming the cover member. Therefore, the avian repellent is retained for a considerably long period of time in the sheds of the cover member, which are the most attractive portions to birds and the targets of mischief. Once a bird has pecked the cover member of the bird-pecking-preventive polymer insulator, the bird never pecks the cover member again. Thus, it is considered that, if birds repeatedly gain such experience, the birds will instinctively refuse to peck the cover member of the bird-pecking-preventive polymer insulator.

In an experiment in which power transmission equipment having the bird-pecking-preventive polymer insulators has been actually constructed, there have been identified a small number of polymer insulators having few marks in the cover member indicating pecking by birds during a period of constructing power transmission equipment. Most of the polymer insulators have been identified to have no pecking marks.

### BRIEF DESCRIPTION OF THE DRAWINGS

Various other objects, features, and many of the attendant advantages of the present invention will be readily appreciated as the same becomes better understood with reference to the following detailed description of the preferred embodiments when considered in connection with the accompanying drawings, in which:
FIG. 1 is a partially broken side view of a polymer insulator employed in the present invention;
FIG. 2 is a partial side view showing the appearance of the bird-pecking-preventive polymer insulator according to the present invention after passage of a construction period; and
FIG. 3 is a partial side view showing the appearance of a conventional polymer insulator after passage of a construction period.

### DETAILED DESCRIPTION OF PREFERRED EMBODIMENTS

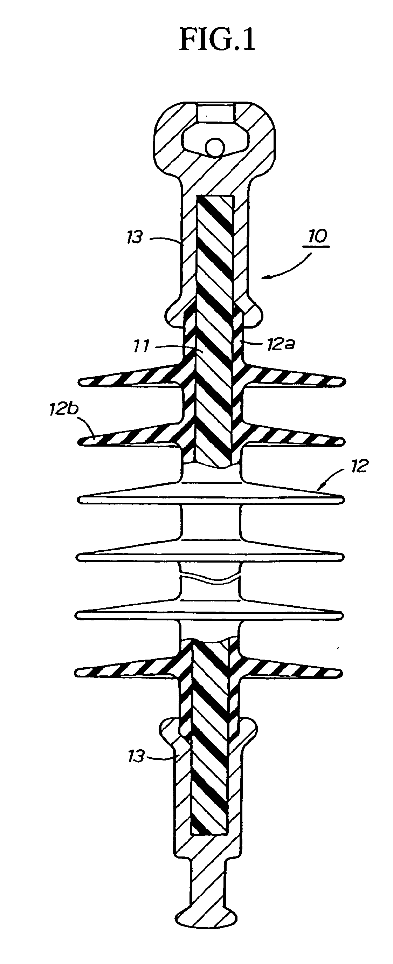

The present invention provides a bird-pecking-preventive polymer insulator, and the bird-pecking-preventive polymer insulator is a polymer insulator having such a structure including an insulator body, and a holding metal piece fitted on each end of the insulator body, the insulator body being composed of a core member formed of a reinforced plastic material and a cover member formed of a rubber material and covering the periphery of the core member. FIG. 1 shows an exemplified conventional polymer insulator having a structure that is employed in the present invention.

The polymer insulator 10 includes an insulator body composed of a core member 11 in the form of a rod having a predetermined length, and a cover member 12 virtually completely covering the periphery the core member 11. The core member 11 is made of reinforce reinforced plastic material being formed of glass-fiber-reinforced epoxy resin. The cover member 12 is formed of silicone rubber. To each end of the core member 11, serving as a member of the polymer insulator body, a holding metal piece 13 is fitted on a portion of the core member 11 coated with the cover member 12 and fixed through a crimping means, thereby forming the polymer insulator 10.

The cover member 12 includes a body portion 12a which covers the periphery of the rod core member 11, and a plurality of disk-like sheds 12b which are integrally formed with the body portion 12a and protrude radially outwardly from the periphery of the body portion 12a. Sheds 12b are arranged, in a ladder-like fashion, at uniform intervals in a longitudinal direction of the core member 11. The cover member 12 is integrally formed with the core member 11 through vulcanization-based adhesion to the periphery the core member 11. The body portion 12a and the sheds 12b of the cover member 12 are integrally formed when the cover member 12 is integrally formed with the core member 11. The polymer insulator 10 is known *per se.*

A polymer insulator 10A according to the present invention has the same structure as that of the polymer insulator 10, but the cover member 12 carries a taste-bud irritant serving as an avian repellent. Examples of preferred taste-bud irritants include substances derived from plants containing a pungent component or a bitter component, and pungent components and bitter components extracted from plants.

Examples of the substance containing a pungent component include substances derived from Capsicum annuum, Zingiber officinale, Zanthoxyum piperitum, Gomphrena globosa, Polygonum hydropiper, Wasabia japonica, or seeds of Brassica juncea. Examples of the pungent component include capsaicin, 6-gingerol, α-sanshool, spilanthol, tadeonal, and sinigrin. Examples of the substance containing a bitter component include substances derived from Swertia japonica, Picrasma quassioides, and Sophora flavescens. Examples of the bitter component include swertiamarin, quassin, and matrine. In the embodiments of the present invention, the bird-pecking-preventive polymer insulator 10A employs capsaicin, which is a pungent component readily available from pepper (Capsicum annuum).

Capsaicin may be carried on the cover member 12 by the following means. In one method, capsaicin is dissolved in ethanol, and the solution is sprayed onto the surfaces of the body portion 12a and the sheds 12b of the cover member 12 by use of an apparatus such as an atomizer. In another method, capsaicin is dissolved in silicone oil, and the solution is applied to the surfaces of the body portion 12a and the sheds 12b of the cover member 12. In still another method, capsaicin is caused to be kneaded into unvulcanized silicone rubber, which is molded to form the cover member 12. These methods may be appropriately selected in order to cause the cover member to carry capsaicin. The amount of capsaicin to be carried by the cover member 12 may be appropriately selected within a range of 0.01 wt.% to 20 wt.% based on the cover member 12.

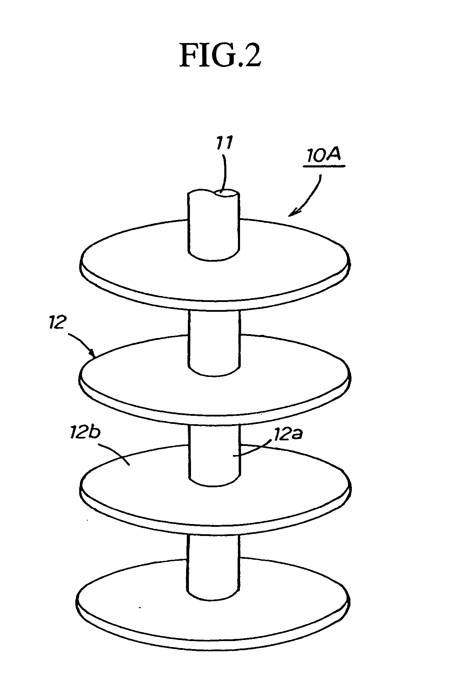

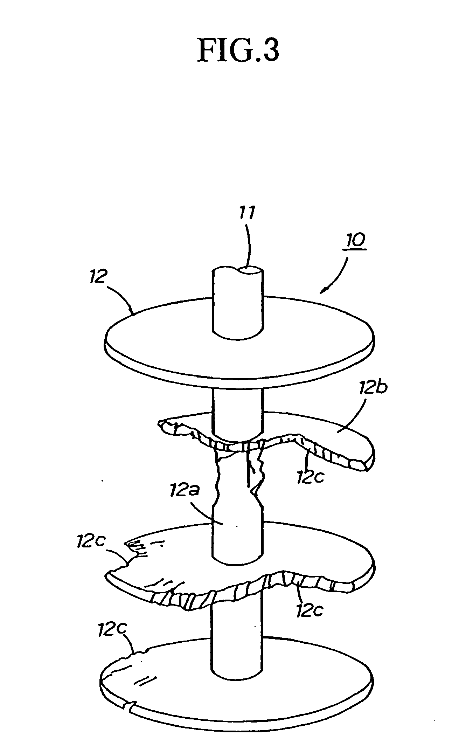

FIG. 2 shows the appearance of a portion of the bird-pecking-preventive polymer insulator 10A according to the present invention after completion of construction of power transmission equipment, and FIG. 3 shows the appearance of a portion of a conventional polymer insulator 10 after completion of construction of power transmission equipment carried out in the same area. The construction of the power transmission equipment was carried out for three month in an area, outside Japan, where the natural environment is well conserved. By virtue of the ideal natural environment, a large number and a wide variety of wild birds such as parrots and crows live in the above area. Therefore, in the area, pecking of conventional polymer insulators 10 by birds occurs frequently. FIG. 3 shows pecked portions (lost portions 12c) during the construction period of power transmission equipment. In contrast, as shown in FIG. 2, virtually no pecked portions (such as lost portions 12c) are identified in the bird-pecking-preventive polymer insulator 10A according to the present invention during the construction period of the power transmission equipment.

In the embodiment, the bird-pecking-preventive polymer insulator 10A according to the present invention employs capsaicin (pungent component) serving as a taste-but irritant. However, other pungent components are identified to exert a bird-pecking-preventive effect the same as or approximately the same as the effect of capsaicinmployed in the bird-pecking-preventive polymer insulator 10A.

### EXAMPLES

### Example 1

In Example 1, the bird-pecking-preventive effect of the bird-pecking-preventive polymer insulator according to the present invention was experimentally confirmed and also, a conventional polymer insulator was observed so as to be compared with the bird-pecking-preventive effect of the bird-pecking-preventive polymer insulator of the present invention. In Example 1, the following avian repellents were employed: a 5 wt.% solution of capsaicin dissolved in ethanol (repellent 1); a 0.05 wt.% solution of capsaicin dissolved in ethanol (repellent 2); and a 0.05 wt.% solution of capsaicin dissolved in silicone oil (repellent 3).

In each experiment, the polymer insulator samples had the same structure as those employed in the above embodiment (i.e., conventional polymer insulators). Each polymer insulator sample had four sheds arranged in a ladder-like fashion. The insulator body had a length of 25 cm, and each shed had an outer diameter of 12.6 cm and a thickness of 0.7 cm.

Sample 1 was prepared by applying repellent 1 to the entire surfaces of the sheds forming the insulator body through spraying. In sample 1, coating film of repellent 1 covered the entire surfaces of the sheds. Sample 2 was prepared by applying repellent 2 to the entire surfaces of the sheds forming the insulator body through spraying. In sample 2, coating film of repellent 2 covered the entire surfaces of the sheds. Sample 3 was prepared by applying repellent 3 to the entire surfaces of the sheds forming the insulator body through brush coating. In sample 3, the repellent 3 permeated the sheds from the entire surfaces thereof and was uniformly dispersed inside the sheds. Sample 4 was the polymer insulator body without undergoing any treatment, which is equivalent to a conventional polymer insulator body carrying no avian repellent.

In Example 1, a cage having dimensions of 2 m × 2 m × 2 m (height) and two macaws were provided. The polymer insulator sample(s), the two macaws, and feed therefor were placed in the cage, and the insulator sample pecked by the macaws was observed for the severity of damage. Under the conditions in the above cage, the two macaws kept in the cage have only two alternatives; i.e., eating the feed or pecking the insulator sample. Namely, the insulator sample was placed under conditions much more severe than those under which polymer insulators are placed in the actual construction period of power transmission equipment.

The specific procedure of Example 1 will be described. At first, sample 4 (avian-repellent-free) was placed in the cage accommodating two macaws and feed therefor so as to accustom the macaws to the shape of sample 4, which is an unknown object to the macaws. Since macaws peck an object only after they have confirmed the taste of the object by their tongues, the two macaws were caused to recognize that insulator sample 4 was safe to the macaws. After the macaws had been confirmed to start pecking of a shed of sample 4, the sample 4 was further maintained in the cage under the above conditions. The sheds of sample 4 pecked by the macaws were observed for the severity of damage.

Sample 4 was removed from the cage after almost all the sheds had been damaged (Day 5). Subsequently, insulator samples 2 and 3, which were less pungent, were simultaneously placed in the cage. After the macaws had been confirmed to start pecking of a shed of sample 2 or 3, the samples 2 and 3 were further maintained in the cage under the above conditions. The sheds of samples 2 and 3 pecked by the macaws were observed for the severity of damage. Among two samples, sample 3 was removed from the cage when almost all the sheds had been damaged (Day 10). Subsequently, insulator sample 1, which was very pungent, was placed in the cage. The sheds of sample 1 were observed for the severity of damage.

Each sample (i.e., polymer insulator) pecked by the macaws under such severe conditions was observed from the outside of the cage to confirm the loss status of sheds. The results are shown in Table 1. In Table 1, "start of pecking" refers to the time the macaws started pecking a shed of each insulator sample, as measured from the time the corresponding sample was placed in the cage. "Experiment day (day)" refers to the number of days elapsed from the time the corresponding sample was placed in the cage. The numerical data corresponding to each experiment day refer to the ratio (%) of the total volume of the portions of sheds lost by pecking to the total volume of the sheds at an initial stage.

**Table 1**

| Loss Status of Polymer Insulator (Damage Ratio) | | | | |
|---|---|---|---|---|
| Experiment day (day) | Insulator sample | | | |
| | 1 | 2 | 3 | 4 |
| 1 | 0 | 0 | Trace | 70% |
| 2 | 0 | 0 | 50% | 80% |
| 3 | 0 | Trace | 60% | 90% |
| 5 | 0 | 40% | 70% | 100% |
| 7 | 0 | 60% | 90% | - |
| 10 | Trace | 70% | 100% | - |
| 15 | Trace | 90% | - | - |
| Start of pecking | Day 10 | Day 3 | Day 1 | 5 min |
| Sample 1: coated with capsaicinthanol solution (5 wt.%) | | | | |
| Sample 2: coated with capsaicinthanol solution (0.05 wt.%) | | | | |
| Sample 3: permeation with capsaicin/silicone oil solution (0.05 wt.%) | | | | |
| Sample 4: avian-repellent-free sample Start of pecking: the time when pecking of the sample started Loss status (damage ratio): the ratio (%) of total volume of the lost portions of sheds to the total volume of the sheds at an initial stage | | | | |

As is clear from Table 1, the macaws initiated pecking of a shed of a conventional polymer insulator (sample 4) placed under considerably severe conditions only five minutes after placement of the sample, and on Day 5, almost the entire sheds were lost. In the cases of the polymer insulator samples 1 to 3 in which an avian repellent was carried by the sheds, the day of start of pecking of a sample by the macaws and the days elapsed to result in considerable loss were remarkably delayed, and the degree of retardation was found to increase when the amount of avian repellent carried by the sheds increased.

Sample 1 has sheds coated with a 5 wt.% solution of capsaicin in ethanol, and sample 2 has sheds coated with a 0.05 wt.% solution of capsaicin in ethanol. Thus, the amount of capsaicin carried on the surfaces of the sheds is much higher in sample 1 than in sample 2, leading to very high bird-pecking-preventive effect of sample 1.

Samples 2 and 3 employed avian repellents at the same concentration. In sample 2, a capsaicinthanol solution was applied to the surfaces of the sheds, and capsaicin virtually remained on the surfaces of the sheds. In the case of sample 3, although a capsaicin/silicone oil solution was applied to the surfaces of the sheds, capsaicin migrates from the surfaces to the inside of the sheds. Thus, the amount of capsaicin remaining on the surfaces of the sheds of sample 3 is much smaller as compared with sample 2. Therefore, sample 3 exhibited a bird-pecking-preventive effect higher than that of sample 4, but lower than that of sample 2.

### Example 2

In Example 2, insulator samples were prepared by using two types of avian repellents different from the avian repellent employed in Example 1. The bird-pecking-preventive effect of two types of bird-pecking-preventive polymer insulators was experimentally confirmed.

In the experiments of Example 2, a 5 wt.% solution of 6-gingerol dissolved in ethanol (repellent 5), and a 5 wt.% solution of quassin dissolved in ethanol (repellent 6) were employed as avian repellents. Upon preparation of insulator samples of the experiments, a polymer insulator having the same shape and structure as those employed in the experiments of Example 1 was used. Sample 5 was prepared by applying repellent 5 to the entire surfaces of the sheds forming the insulator body through spraying, and sample 6 was prepared by applying repellent 6 to the entire surfaces of the sheds forming the insulator body through spraying. In each case, coating film of repellent 5 or 6 covered the entire surfaces of the sheds.

In Example 2, two cages, each having dimensions of 2 m × 2 m × 2 m (height), were employed. The polymer insulator sample 5 or 6, the two macaws, and feed therefor were placed in each cage, and the insulator sample pecked by the macaws was experimentally observed. The conditions which the two cages were placed were the same as those of the cage employed in Example 1, and the insulator samples 5 and 6 were placed under much more severe conditions than polymer insulators which are placed in the actual construction period of power transmission equipment. In a specific procedure, sample 5 was placed in one cage accommodating the two macaws and feed therefor, and sample 6 was placed in the other cage accommodating the two macaws and feed therefor. The sheds of samples 5 and 6 placed in the cages and pecked by the macaws were observed for the severity of damage.

The samples 5 and 6 pecked by the macaws under such sever conditions were observation from the outside of the cage to confirm loss status of sheds. The results are shown in Table 2, along with the results in relation to sample 4 (avian-repellent-free) of Example 1. In Table 2, similar to Table 1 in Example 1, "start of pecking" refers to the time the macaws started pecking a shed of each insulator sample, as measured from the time when the corresponding sample was placed in the cage. "Experiment day (day)" refers to the number of days elapsed from the time the corresponding sample was placed in the cage. The numerical data corresponding to each experiment day refer to the ratio (%) of the total volume of the lost sheds to the total volume of the sheds at an initial stage.

**Table 2**

| Loss Status of Polymer Insulator (Damage Ratio) | | | |
|---|---|---|---|
| Experiment day (day) | Insulator sample | | |
| | 4 | 5 | 6 |
| 1 | 70% | 0 | 0 |
| 2 | 80% | 0 | 0 |
| 3 | 90% | 0 | Trace |
| 5 | 100% | Trace | 40% |
| 7 | - | 20% | 60% |
| 10 | - | 40% | 70% |
| 15 | - | 60% | 90% |
| Start of pecking | 5 min | Day 5 | Day 3 |
| Sample 4: avian-repellent-free sample | | | |
| Sample 5: coated with 6-gingerol/ethanol solution (5 wt.%) | | | |
| Sample 6: coated with quassin/ethanol solution (5 wt.%) Start of pecking: the time when pecking of the sample started Loss status (damage ratio): the ratio (%) of total volume of the lost portions of the sheds to the total volume of the sheds at an initial stage | | | |

As is clear from Table 2, the macaws initiated pecking of a shed of a conventional polymer insulator (sample 4) placed under considerably severe conditions only five minutes after placement of the sample, and on Day 5, almost the entire sheds were lost. In the cases of the polymer insulator samples 5 and 6 in which an avian repellent was carried by the sheds, the day of start of pecking of a sample by the macaws and the days elapsed to result in considerable loss were remarkably delayed.

A slight difference in bird-pecking-preventive effect was observed between insulator samples 5 and 6. Although the experimental conditions were not completely the same, a difference in bird-pecking-preventive effect was identified between samples 5 and 6 and samples 1 to 3. Such differences in bird-pecking-preventive effect between samples are considered to be attributed to the difference in the type of the avian repellent, in the mode of carrying the avian repellent, in the amount of carried avian repellent, and other factors.

Obviously, numerous modifications and variations of the present invention are possible in light of the above teachings. It is therefore to be understood that within the scope of the appended claims, the present invention may be practiced otherwise than as specifically described herein.

An object of the present invention is to prevent breakage of a cover member of a polymer insulator caused by pecking by a bird, through use of an avian repellent which is carried by the polymer insulator and an avian repellency maintained at least during construction of power transmission equipment, thereby inhibiting pecking of the polymer insulator by birds. The bird-pecking-preventive polymer insulator according to the present invention includes an insulator body, and a holding metal piece 13 fitted on each end of the insulator body, the insulator body being composed of a core member 11 formed of a reinforced plastic material and a cover member 12 formed of a rubber material and covering the periphery of the core member, wherein the cover member 12 carries an avian repellent such as capsaicin.

## Claims

1. A bird-pecking-preventive polymer insulator comprising:
an insulator body, and a holding metal piece fitted on each end of the insulator body,
the insulator body being composed of a core member formed of a reinforced plastic material and a cover member formed of a rubber material and covering the periphery of the core member, wherein
the cover member carries an avian repellent thereon, wherein the avian repellent is a taste-bud irritant for irritating the taste of a bird, wherein the taste-bud irritant is a substance derived from the groups:
(a) Capsicum annuum, Zingiber officinale, Zanthoxyum piperitum, Gomphrena globosa, Polygonum hydropiper, Wasabia japonica, or seeds of Brassica juncea, or a pungent component extracted therefrom,
(b) Swertia japonica, Picrasma quassioides, or Sophora flavescens, or a bitter component extracted therefrom.

2. A bird-pecking-preventive polymer insulator as described in claim 1, wherein the polymer insulator carries the avian repellent as applied to a surface of the cover member.

3. A bird-pecking-preventive polymer insulator as described in claim 1, wherein the polymer insulator carries the avian repellent kneaded into the rubber material that forms the cover member.

4. A bird-pecking-preventive polymer insulator as described in any one of claims 1 to 3, wherein the polymer insulator carries the avian repellent in an amount of 0.01 wt.% to 20 wt.% based on the entire cover member.

## Patentansprüche

1. Polymerisolator zum Verhindern des Pickens von Vögeln umfassend:
einen Isolationskörper und ein Trägermetallteil, das an jedem Ende des Isolationskörpers eingepasst ist,
wobei der Isolationskörper aus einem Kernelement, das aus einem verstärkten Kunststoffmaterial gebildet ist, und einem Abdeckelement besteht, das aus einem Kautschukmaterial gebildet ist und den Umfang des Kernelements abdeckt, wobei
das Abdeckelement ein Mittel zum Fernhalten von Vögeln trägt, wobei das Mittel zum Fernhalten von Vögeln ein Reizmittel für die Geschmacksknospen zum Aufreizen des Geschmacks von Vögeln dargestellt, wobei das Reizmittel für die Geschmacksknospen ein Stoff ist, der aus den folgenden Gruppen abgeleitet ist:
(a) Capsicum annuum, Zingiber officinale, Zanthoxylum piperitum, Gomphrena globosa, Polygonum hydropiper, Wasabia japonica, oder Samen von Brassica juncea oder ein daraus extrahierter stechender Bestandteil,
(b) Swertia japonica, Picrasma quassioides oder Sophora flavescens oder ein daraus extrahierter bitterer Bestandteil.

2. Polymerisolator zum Verhindern des Pickens von Vögeln nach Anspruch 1, wobei der Polymerisolator das Mittel zum Fernhalten von Vögeln dadurch trägt, dass es auf einer Oberfläche des Abdeckelements aufgetragen ist.

3. Polymerisolator zum Verhindern des Pickens von Vögeln nach Anspruch 1, wobei der Polymerisolator das Mittel zum Fernhalten von Vögeln, wie in das das Abdeckelement bildende Kautschukmaterial eingemischt, trägt.

4. Polymerisolator zum Verhindern des Pickens von Vögeln nach einem der Ansprüche 1 bis 3, wobei der Polymerisolator das Mittel zum Fernhalten von Vögeln in einer Menge von 0,01 Gew.-% bis 20 Gew.-% bezogen auf das ganze Abdeckelement trägt.

## Revendications

1. Isolateur polymère pour empêcher le picotement par des oiseaux comprenant:
un corps isolant, et une pièce métallique de maintien ajustée sur chaque extrémité du corps isolant,
le corps isolant étant composé d'un élément central formé d'un matériau en plastique renforcé et un élément de recouvrement formé d'un matériau en caoutchouc et recouvrant la périphérie de l'élément central, dans lequel
l'élément de recouvrement porte, sur lui, un répulsif aviaire, où le répulsif aviaire est un irritant de papille gustative pour irriter le goût d'un oiseau, où l'irritant de papille gustative est une substance dérivée des groupes:
(a) Capsicum annuum, Zingiber officinale, Zanthoxyum piperitum, Gomphrena globosa, Polygonum hydropiper, Wasabia japonica, ou des graines de Brassica juncea, ou un composant piquant extrait de ces derniers,
(b) Swertia japonica, Picrasma quassioides, ou Sophora flavescens, ou un composant amer extrait de ces derniers.

2. Isolateur polymère pour empêcher le picotement par des oiseaux comme décrit dans la revendication 1, dans lequel l'isolateur polymère porte le répulsif aviaire comme appliqué à une surface de l'élément de recouvrement.

3. Isolateur polymère pour empêcher de picoter des oiseaux comme décrit dans la revendication 1, dans lequel l'isolateur polymère porte le répulsif aviaire malaxé dans le matériau en caoutchouc qui forme l'élément de recouvrement.

4. Isolateur polymère pour empêcher le picotement par des oiseaux comme décrit dans l'une quelconque des revendications 1 à 3, dans lequel l'isolateur polymère porte le répulsif aviaire en une quantité de 0,01% en poids à 20% en poids sur la base de tout l'élément de recouvrement.
